# EUROPEAN PATENT SPECIFICATION

(11) **EP 3 542 621 B1**
(45) Date of publication and mention of the grant of the patent: **15.06.2022**
(21) Application number: 18191499.5
(22) Date of filing: 29.08.2018
(51) Int. Cl.: A01K 7/02

(54) **PET WATER FOUNTAIN**
HAUSTIER WASSERBRUNNEN
FONTAINE D'EAU POUR ANIMAUX DE COMPAGNIE

(30) Priority: 20.03.2018 CN 201820380711 U
(43) Date of publication of application: 25.09.2019
(73) Proprietor: Huang, Junzhou, Shenzhen Guangdong 518000 (CN)
(72) Inventor: Huang, Junzhou, Shenzhen Guangdong 518000 (CN)
(74) Representative: ZHAOffice SPRL

(56) References cited:
- GB-A- 802 994
- US-A1- 2006 174 838
- US-A1- 2010 095 897

## Description

### FIELD

The present application generally relates to pet water fountains.

### BACKGROUND

With development of economic level and improvement of living quality, more and more people have pets. Traditional and also the simplest device for feeding water to the pets is an open bowl or an open pot which is filled with water for the pets drinking. However, since pets such as cats and dogs like to drink flowing water, these feeding devices don't conform to such habit of the pets due to water filled in these feeding devices being stagnant water. Furthermore, water filled in these feeding devices are exposed to the air, then water will become stale after a certain time. Pets can't drink flowing and fresh water with these feeding devices, thereby healthy of pets will be affected.

US 2006/174838 A1 discloses a pet drinking fountain, comprising a base and a water supply tank having a closed generally dome-shaped top disposed on the base and extending upwardly therefrom, a water collection area in the base disposed beneath the tank, a channel substantially surrounding the bottom portion of the dome-shaped tank top, a drinking bowl on the top of the tank from which a pet may drink, a water pump disposed in the collection area and connected to a duct for directing water in the area to the drinking bowl and to overflow the bowl onto the upper portion of the tank and spill down over the outer surface of the tank and into the channel, and a discharge passage in the lower portion of the tank top communicating with the base for enabling water in the tank to flow to the collection area of the base when the water in the base falls below a predetermined level. As disclosed in US 2006/174838 A1, the water spills down over the outer surface of the tank.

GB 802994 A discloses a water fountain suitable for use as a pet water fountain, comprising a supporting column or pedestal, a bowl and a second bowl. Inside the pedestal there is arranged a pump. On the pedestal there rests a flange for connecting the bowl and a distributor. Above the bowl there is a shallow dish. The second bowl is closed by a filter. When the pump is running, the water flows through the pipework reaches the manifold and thence spouts through the nozzle forming the jets. The water of the jets falling down in a muffled way, prevents all splashing, due to the brush and the filter, collects in the cone and forms a bell-shaped spray, and passing through holes in the dish fills the bowl. Thence, it is withdrawn through the piping after having been cleaned by the filter, thus returning to the pump, and completing its cycle. As disclosed in GB 802994 A, water spouts through the nozzles located on the outer range forming the jets falling down into the brush and the filter located at the central of the water fountain.

### SUMMARY

The present application provides a pet water fountain capable of providing flowing and fresh water for pets drinking.

According to the invention defined in claim 1, a pet water fountain comprises a bucket configured to hold water, a pump positioned in the bucket, an upper tray, a water storage tray on top of the upper tray, a filter being arranged between the upper tray and the water storage tray, and a flower nozzle supported on top of the water storage tray wherein a pump outlet of the pump communicates with a water inlet of the water storage tray; water in the bucket is pumped upwards from the pump outlet into the water inlet of the water storage tray and then into the flower nozzle, and then falls on the water storing tray from the flower nozzle, and then flows from the water storage to the upper tray after being filtered by the filter tray and back into the bucket wherein the upper tray has a lap edge supported on the top of the bucket, and a recess is formed in the center of the upper tray, with a first hollow pipe being located in the center of the recess, and a plurality of through holes being formed around the first hollow pipe; the filter is contained in the recess surrounding the first hollow pipe; the water storage tray has a second hollow pipe extending downwards to go through the first hollow pipe to connect the pump outlet, the flower nozzle has a plurality of spouts along its periphery and has a third hollow pipe extending downwards from the center of the flower nozzle to be inserted into a second hollow pipe of the water storage tray , and the flower nozzle further has a top cover covering on the top of the third hollow pipe; water in the bucket is pumped upwards from the pump outlet into the second hollow pipe of the water storage tray and then into the third hollow pipe of the flower nozzle and then flows out from the spouts.

In one embodiment, at least one overflow hole is arranged on the upper tray, directly communicated with the inner space of the bucket.

In one embodiment, a plurality of drop holes are formed on the water storage tray which allow water in the water storage tray dropping down and flowing back into the bucket via the plurality of through holes in the recess after being filtered by the filter.

In one embodiment, the water storage tray has an inner flange which surrounds a top end of the second hollow pipe and an outer flange which is supported on the upper tray, and a space for storing water is provided between the inner flange and the outer flange on the water storage tray.

In one embodiment, an upper edge is formed on the top of the third hollow pipe of the flower nozzle, and a plurality of petal-shaped bumps are formed and evenly spaced surrounding the upper edge, an interval between each two adjacent petal-shaped bumps forms the spout.

In one embodiment, the top cover comprises a top baffle covering over inner sides of the plurality of petal-shaped bumps and a fourth hollow pipe extending downwards from the bottom center of the top baffle, and a lower end of the fourth hollow pipe is connected with the third hollow pipe, an upper end of the fourth hollow pipe has openings corresponding to each of the spouts.

In one embodiment, the lower end of the fourth hollow pipe is thread connected with the third hollow pipe.

In one embodiment, a first circle of rib is formed on the bottom of the bucket, and the pump is attached in an area surrounded by the first circle of rib by suction cups provided at the bottom of the pump.

In one embodiment, a filtering sponge which is positioned by a second circle of rib formed on the bottom of the bucket is arranged in front of a pump inlet of the pump.

In one embodiment, a wire passage is formed along the inner side of the bucket, and an electrical wire of the pump is led into the wire passage from top to bottom through the bucket and then is led out from the bottom of the bucket.

In one embodiment, a first notch is formed at the bottom of a sidewall of the bucket towards the wire passage, used for facilitating the electrical wire being led out and/or a second notch is formed on the top of the wire passage, through which the electrical wire of the pump is led into the wire passage and/or the top of the wire passage is stuffed by an elastic plug, and the elastic plug has a third notch for the electrical wire of the pump being led into the wire passage.

In one embodiment, a transparent or semitransparent window is arranged on a sidewall of the bucket.

In one embodiment, the water storage tray is fastened on the upper tray by snap-fit or close-fit structures, and the upper tray is fastened on the bucket by snap-fit or close-fit structures.

In one embodiment, at least a fourth notch is formed on the top end of the bucket for facilitating separation of the upper tray and the bucket.

In one embodiment, the filter comprises a lower layer of non-woven cloth having a plurality of containing cavities and a upper layer of non-woven cloth that is attached to the lower layer so as to seal the plurality of containing cavities, and filtering material is filled in each of the plurality of containing cavities.

Objectives, features, and advantages of the present invention will become apparent upon examining the following detailed description of an embodiment thereof, taken in conjunction with the attached drawings.

### BRIEF DESCRIPTION OF THE DRAWINGS

These and other features, aspects, and advantages of the present application will be better understood with regard to the following description, appended claims, and accompanying drawings as follows:
FIG. 1 is an exploded perspective view of a pet water fountain according to a first embodiment of the present application;
FIG. 2 is a perspective view of the pet water fountain shown in FIG.1 in assembled state;
FIG. 3 is a sectional view of the pet water fountain shown in FIG.2;
FIG. 4 is an exploded perspective view of a flower nozzle according to the first embodiment of the present application;
FIG. 5 is a part sectional view of the flower nozzle shown in FIG.4;
FIG. 6 is an exploded perspective view of a filter according to the first embodiment of the present application.
FIG. 7 is an exploded perspective view of a pet water fountain according to a second embodiment of the present application;
FIG. 8 is a perspective view of the pet water fountain shown in FIG.7 in assembled state;
FIG. 9 is a sectional view of the pet water fountain shown in FIG.8;
FIG. 10 is a perspective view of a bucket according to the second embodiment of the present application;
FIG. 11 is a perspective view of a pump in combination with an elastic plug according to the second embodiment of the present application.

### DETAILED DESCRIPTION

To explain objects, technical solutions and advantages of the present application more clearly, the present application will be further described with reference to the accompanying drawings and embodiments in the following. It should be understood that, the specific embodiments described here are only for explanation, but not for limitation to the present application.

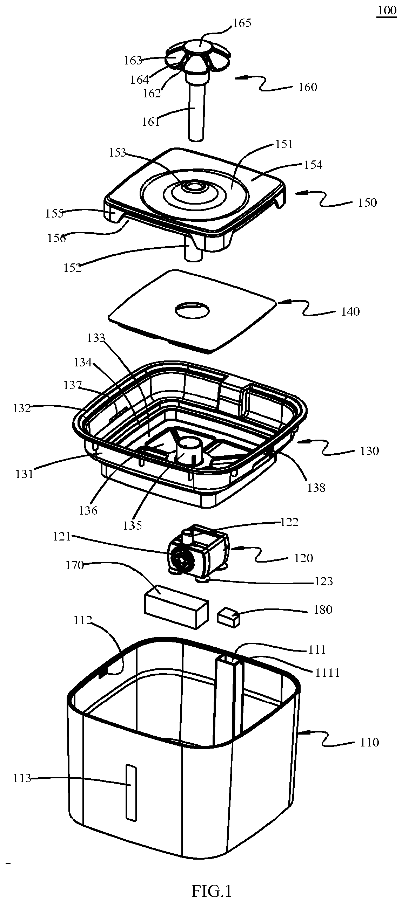

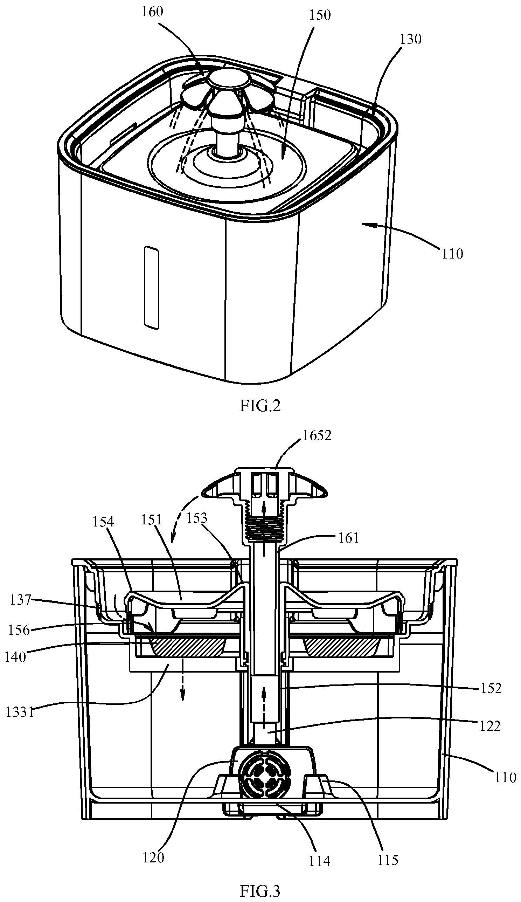

According to a first embodiment of the present application as shown in FIG. 1 to FIG.3, a pet water fountain 100 mainly comprises a bucket 110, a pump 120, a upper tray 130, a filter 140, a water storage tray 150, and a flower nozzle 160. The bucket 110 is closed at the bottom, but open at the top, used to hold water for pets drinking. A transparent window 113 is arranged on at least one sidewall of the bucket 110, facilitating users to watch water level inside the bucket 110. A recess 114 is formed in the bottom of the bucket 110, and four angle blocks 115 are located along the recess 114 (referring to FIG.3). The pump 120 is detachably attached in the recess 114. For example, the pump 120 may be attached in the recess 114 by suction cups 123 provided at the bottom of the pump 120. Preferably, a filter sponge 170 is arranged in front of a pump inlet 121 of the pump 120. The filter sponge 170 is configured to pre-filter water flowing into the pump 120. Further as shown in FIG.1, a wire passage 111 is formed along the inner side of the bucket 110. The wire passage 111 extends from the top of the bucket 110 downwards to go through the bottom of the bucket 110. An electrical wire of the pump 120 may be led into the wire passage 111 from top to bottom through the bucket 110 and then led out from the bottom of the bucket 110. Compared to traditional design of leading the electrical wire out directly from the bottom of the bucket 110, such design in the present application can ensure that water in the bucket 110 will not leak out from the wire leading hole. Furthermore, a notch 1111 is formed on the top of the wire passage 111. Through the notch 1111, the electrical wire of the pump 120 is led into the wire passage 111, and then a sealing cap 180 such as a rubber sealing cap stuffs the top of the wire passage 111 so as to more effectively avoid water leaking from the wire passage 111.

Further as shown in FIG.1 to FIG.3, the upper tray 130 is detachably mounted on the top of the bucket 110 and covers the bucket 110. Referring to FIG.1, the upper tray 130 has a lap edge 132 corresponding to shape of the top of the bucket 110. The lap edge 132 resides on the top of the bucket 110. The upper tray 130 is snapped into the bucket 110 by protruding elements 138 formed on the outer side of two sidewalls of the upper tray 130 being engaged with corresponding slot elements 112 formed on the inner side of the sidewalls of the bucket 110. A recess 133 is formed in the center of the upper tray 130 for containing the filter 140. Specifically as shown in FIG.1 and FIG.3, a first hollow pipe 135 extends from the center of the recess 133 downwards to the inner space of the bucket 110, and a plurality of through holes 136 are formed around the first hollow pipe 135 on the bottom of the recess 133. The filter 140 is placed in the recess 133, surrounding the first hollow pipe 135. The upper tray 130 further has a first step 134 extending outwardly surrounding the top of the first recess 133. The first step 134 is configured to install the water storage tray 150. The water storage tray 150 has an external contour consistent with the shape of the first step 134, and in the center of the water storage tray 150, a second hollow pipe 152 extends downwards to go through the first hollow pipe 135 to connect a pump outlet 122 (referring to FIG.3) of the pump 120. Further, the water storage tray 150 has an inner flange 153 surrounding the top of the second hollow pipe 152, and the water storage tray 150 also has an outer flange 154 along its outer periphery, thereby a water containing space 151 is formed between the inner flange 153 and the outer flange 154, and the inner flange 153 must be higher than the outer edge 154 so as to ensure that water in the water storage tray 150 only overflows from the outer periphery of the water storage tray 150. The water storage tray 150 further has an outer sidewall 155 extending downwards to being supported on the first step 134 of the upper tray 130, and four gaps 156 are respectively configured on the bottom of the four outer sidewalls 155 to allow water overflowed from the outer edge 154 of the water storage tray 150 flowing through the four gaps 156 into the recess 133 of the upper tray 130, and then flowing back into the bucket 110 via the plurality of through holes 136 after being filtered by the filter 140 in the recess 133.

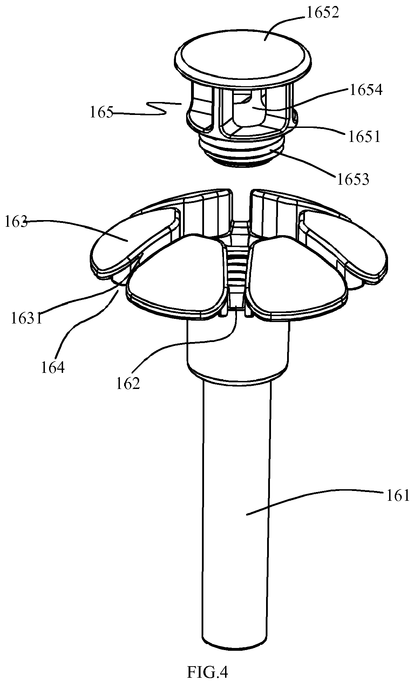

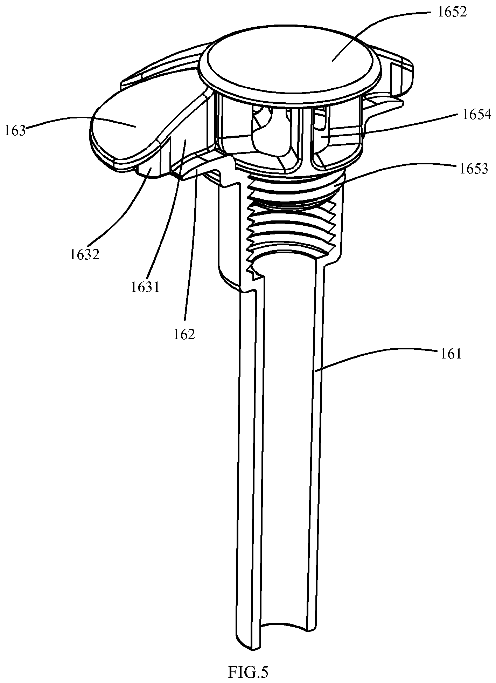

Further as shown in FIG.1 to FIG.3, the flower nozzle 160 is mounted on the water storage tray 150. The flower nozzle 160 has a plurality of spouts 164 along its periphery and has a third hollow pipe 161 extending downwards from the center of the flower nozzle 160 to be inserted into the second hollow pipe 152 of the water storage tray 150. The flower nozzle 160 further has a top cover 165 covering on the top of the third hollow pipe 161. Water in the bucket 110 is pumped upwardly from the pump outlet 122 into the second hollow pipe 152 of the water storage tray 150 and then into the third hollow pipe 161 of the flower nozzle 160 and then flowing out from the spouts 164. Specifically as shown in FIG.4 and FIG.5, an upper edge 162 extending outwardly is formed on the top of the third hollow pipe 161of the flower nozzle 160, and a plurality of petal-shaped bumps 163 are formed and evenly spaced surrounding the upper edge 162, an interval between each two adjacent petal-shaped bumps 163 forms the spout 164. That is to say, each spout 164 is surrounded by sidewalls 1631 of the two adjacent petal-shaped bumps 163 and the upper edge 162. Furthermore, the sidewalls 1631 of the petal-shaped bumps 163 may extend outwardly beyond the upper edge 162 to form baffles 1632 (as shown in FIG.5) which ensures water can flow out from the spouts 164 more freely. Again referring to FIG.4 and FIG.5, the top cover 165 comprises a top baffle 1652 covering over inner sides of the plurality of petal-shaped bumps163, and a fourth hollow pipe 1651 extends downwards from the bottom center of the top baffle 1652. A lower end of the fourth hollow pipe 1651 has external thread 1653 which is inserted into the third hollow pipe 161 and is thread connected with the third hollow pipe 161. An upper end of the fourth hollow pipe 1651 has openings 1654 so as to ensure that each of the spouts 164 is opposite to one of the openings 1654 when the fourth hollow pipe 1651 is thread connected with the third hollow pipe 161. Therefore, after water in the bucket 110 is pumped upwardly from the pump outlet 122 into the second hollow pipe 152 of the water storage tray 150 and then into the third hollow pipe 161 of the flower nozzle 160, water will be blocked by the top baffle 1652 and then flow out from the spouts 164. In the other embodiments according to the present application, bumps 143 forming the spouts may be designed as various shapes, not being restrictive of the petal-shape as shown in the figures, so as to bring different aesthetic effect.

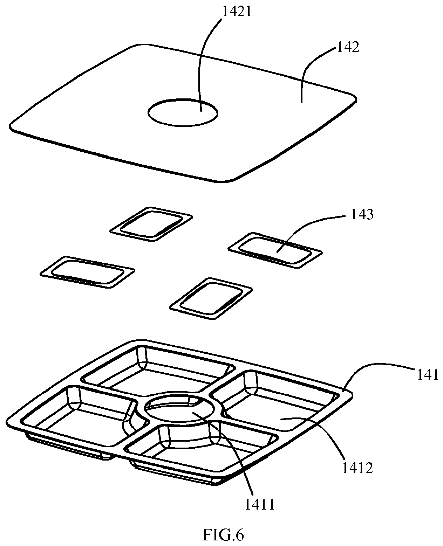

As shown by the dotted lines in FIG.3, water circulation process of the pet water fountain 100 is as below: water in the bucket 110 is pumped by the pump 120 into the second hollow pipe 152, then flows out from the plurality of spouts 164 of the flower nozzle 160 through the third hollow pipe 161, and then falls into the water containing space 151 on the water storage tray 150; when water level in the water containing space 151 is high over the outer flange 154, water overflows from the outer flange 154 into the recess 133 via the gaps 156, and then flows back into the bucket 110 via the through holes 136 on the bottom 1331 of the recess 133 after being filtered by the filter 140. Additionally, at least one overflow hole 137 is arranged on the sidewall of the upper tray 130, directly communicated with the inner space of the bucket 110. Water overflowing from the recess 133 may be directly flow back into the bucket 110 via the overflow hole 137. Then water flows through the filter sponge 170 and is pumped into the second hollow pipe 152 again by the pump 120. Thus water circulation is realized, and water is cyclically filtered to keep fresh so as to protect health of the pets. FIG.6 shows the structure of the filter 140 in the pet water fountain 100 according to the first embodiment of the present application. The filter 140 comprises a lower layer of non-woven cloth 141 and an upper layer of non-woven cloth 142, and both of them have corresponding central holes 1411 and 1421. The lower layer of non-woven cloth 141 has a plurality of containing cavities 1412, and the upper layer of non-woven cloth 142 is hot melted or ultrasonic welded with the lower layer 141 so as to seal the plurality of containing cavities 1412. A filter material package 143 of activated carbon and/or ion-exchange resin is filled in each of the containing cavities 1412, used for filtering water flowing back into the bucket 110.

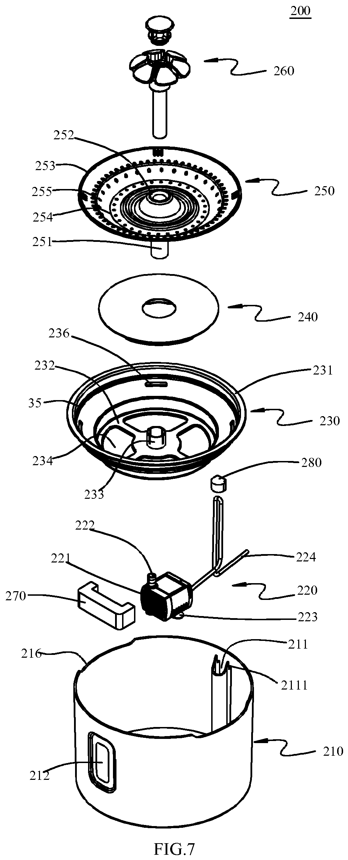

FIG. 7 to FIG.9 show a pet water fountain 200 according to a second embodiment of the present application. The pet water fountain 200 has a similar structure and water circulation process as the pet water fountain 100 according to the first embodiment of the present application. As shown in FIG. 7 to FIG.9, the pet water fountain 200 mainly comprises a bucket 210, a pump 220, an upper tray 230, a filter 240, a water storage tray 250, and a flower nozzle 260. The bucket 210 is configured to hold water. The pump 220 is positioned in the bucket 210. The upper tray 230 is on top of the bucket 210, the water storage tray 250 is on top of the upper tray 230, and the filter 240 is arranged between the upper tray 230 and the water storage tray 250. A pump outlet 222 of the pump 220 is connected to a water inlet 251 of the water storage tray 250. Water in the bucket 210 is pumped upwards from the pump outlet 222 into the water inlet 251 of the water storage tray 250 and then falls from the water storage tray 250 onto the upper tray 230, and then flows back into the bucket 210 through the upper tray 230 after being filtered by the filter 240.

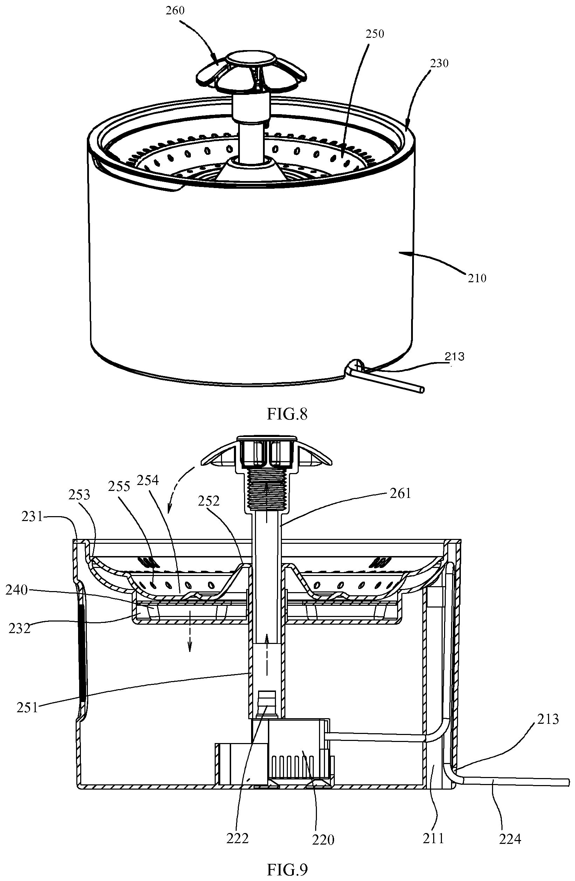

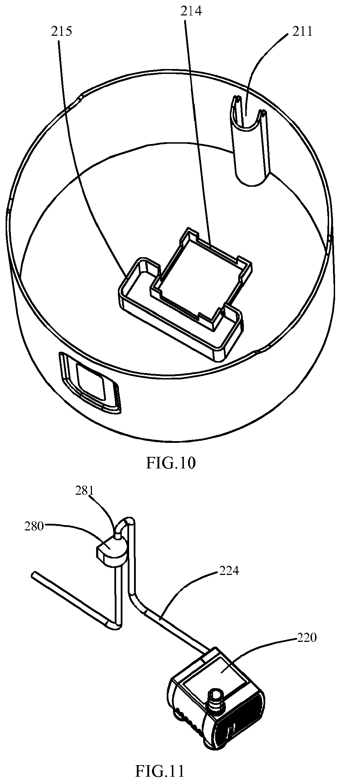

Specifically, a transparent or semitransparent window 212 is arranged on a sidewall of the bucket 210, facilitating users to watch water level inside the bucket 210. A first circle of rib 214 is formed on the bottom of the bucket 210 (referring to FIG.10), and the pump 220 is detachably attached in an area surrounded by the first circle of rib 214. For example, the pump 220 may be attached in the area surrounded by the first circle of rib 214 by suction cups 223 provided at the bottom of the pump 220. Preferably, a filtering sponge 270 is arranged in front of a pump inlet 221 of the pump 220. The filtering sponge 270 is configured to pre-filter water flowing into the pump 250. Also the filtering sponge 270 is positioned by a second circle of rib 215 formed on the bottom of the bucket 210 (referring to FIG.10). Similarly as the pet water fountain 100 in the first embodiment, a wire passage 211 is formed along the inner side of the bucket 210. The wire passage 211 extends from the top of the bucket 210 downwards to go through the bottom of the bucket 210. An electrical wire 224 of the pump 220 may be led into the wire passage 211 from top to bottom through the bucket 210 and then led out from the bottom of the bucket 210. Preferably as shown in FIG.8 and FIG.9, a first notch 213 is formed at the bottom of a sidewall of the bucket 210 towards the wire passage 211, used for facilitating the electrical wire 224 being led out. Furthermore, a second notch 2111 is formed on the top of the wire passage 211. Through the second notch 2111, the electrical wire 224 of the pump 220 is led into the wire passage 211, and then a elastic plug 280 such as a rubber plug stuffs the top of the wire passage 211 so as to more effectively avoid water leaking from the wire passage 211. Also the elastic plug 280 has a third notch 281 for the electrical wire 224 of the pump 220 being led into the wire passage 211 (referring to FIG.11).

Further as shown in FIG.7 to FIG.9, the upper tray 230 is detachably mounted on the top of the bucket 210 and covers the bucket 210 by snap-fit or close-fit structures, and the water storage tray 250 is detachably mounted on top of the upper tray 230 by snap-fit or close-fit structures. Referring to FIG.7, the upper tray 230 has a lap edge 231 corresponding to shape of the top of the bucket 210. The lap edge 231 resides on the top of the bucket 210, and the upper tray 230 may be fastened on the bucket 210 by snap-fit or close-fit structures. Two opposite notches 216 are formed on the top end of the bucket 210 for facilitating separation of the upper tray 230 and the bucket 210. A recess 232 is formed in the center of the upper tray 230 for containing the filter 240. Specifically as shown in FIG.7 and FIG.9, a first hollow pipe 233 extends upwards from the center of the recess 232, and a plurality of through holes 234 are formed around the first hollow pipe 233 on the bottom of the recess 232. The filter 240 is placed in the recess 232 surrounding the first hollow pipe 233. The upper tray 230 further has a step 235 over the recess 232. The step 235 is configured to install the water storage tray 250. The water storage tray 250 has an external contour consistent with the shape of the step 235, and in the center of the water storage tray 250, a second hollow pipe 251 extends downwards to go through the first hollow pipe 233 to connect a pump outlet 222 of the pump 220. Further, the water storage tray 250 has an inner flange 252 which surrounds a top end of the second hollow pipe 251, and the water storage tray 250 also has an outer flange 253 which is supported on the step 235 of the upper tray 230, thereby a space 254 for storing water is provided between the inner flange 252 and the outer flange 253 on the water storage tray 250. Further, a plurality circles of drop holes 255 are formed on the water storage tray 250, which allow water in the water storage tray 250 dropping down and flowing back into the bucket 210 via the plurality of through holes 234 in the recess 232 after being filtered by the filter 240. Furthermore, a plurality of overflow holes 236 are arranged on the upper tray 230 over the recess 232. The overflow holes 236 are directly communicated with the inner space of the bucket 210, such that water in the upper tray 230 can also overflows back to the bucket 210 through the overflow holes 236.

The flower nozzle 260 is supported on top of the water storage tray 250, and has a same structure as the flower nozzle 160 of the pet water fountain 100 according to the first embodiment of the present application. Also the filter 240 has a same structure as the filter 140 of the pet water fountain 100 according to the first embodiment of the present application.

As shown by the dotted arrow lines in FIG.9, water circulation process of the pet water fountain 200 is as below: water in the bucket 210 is pumped by the pump 220 into the second hollow pipe 251 which is used as a water inlet of the water storage tray 250, then flows out from the plurality of spouts of the flower nozzle 260 through the third hollow pipe 261, and then falls into the water storing space 254 on the water storage tray 250, and then drops down into the recess 232 of the upper tray 230 via the drop holes 255, and then flows back into the bucket 210 via the through holes 234 on the bottom of the recess 232 after being filtered by the filter 240. Additionally, overflow holes 236 are arranged on the sidewall of the upper tray 230, directly communicated with the inner space of the bucket 210. Water overflowing from the recess 232 may be directly flow back into the bucket 210 via the overflow holes 236. Then water flows through the filter sponge 770 and is pumped into the second hollow pipe 251 again by the pump 220.Thus water circulation is realized, and water is cyclically filtered to keep fresh so as to protect health of the pets.

In another embodiment of the present application, the flower nozzle 260 is not necessary. Water in the bucket 210 is pumped upwards from the pump outlet 222 into the second hollow pipe 251 of the water storage tray 250, and then is stored in the water storing space 254 on the water storage tray 250, and then drops down into the recess 232 of the upper tray 230 via the drop holes 255, and then flows back into the bucket 210 via the through holes 234 on the bottom of the recess 232 after being filtered by the filter 240. Thus water circulation is realized.

Although the present application has been described with reference to specific embodiments thereof, these embodiments are merely illustrative, and not restrictive of, the present application. Various modifications or changes to the specifically disclosed exemplary embodiments will be suggested to persons skilled in the art. In summary, the scope of the application should not be restricted to the specific exemplary embodiments disclosed herein, and all modifications that are readily suggested to those of ordinary skill in the art should be included within the scope of the appended claims.

## Claims

1. A pet water fountain (100, 200) comprising:
a bucket (110, 210) configured to hold water;
a pump (120, 220) positioned in the bucket (110, 210);
an upper tray (130, 230);
a water storage tray (150, 250) on top of the upper tray (130, 230);
a filter (140, 240) being arranged between the upper tray (130, 230) and the water storage tray (150, 250); and
a flower nozzle (160, 260) supported on top of the water storage tray (150, 250);
wherein a pump outlet (122, 222) of the pump (120, 220) communicates with a water inlet (152, 251) of the water storage tray (150, 250); water in the bucket (110, 210) is pumped upwards from the pump outlet (122, 222) into the water inlet (152, 251) of the water storage tray (150, 250), and then into the flower nozzle (160, 260), and then falls on the water storage tray (150, 250) from the flower nozzle (160, 260), and then flows from the water storage tray (150, 250) to the upper tray (130, 230) after being filtered by the filter (140, 240) and back into the bucket (110, 210);
wherein the upper tray (130, 230) has a lap edge (132, 231) supported on a top of the bucket (110, 210), and a recess (133, 232) is formed in the center of the upper tray (130, 230), with a first hollow pipe (135, 233) being located in the center of the recess (133, 232), and a plurality of through holes (136, 234) being formed on the recess (133, 232) around the first hollow pipe (135, 233); the filter is (140, 240) contained in the recess (133, 232) surrounding the first hollow pipe (135, 233);
the water storage tray (150, 250) has a second hollow pipe (152, 251) extending downwards to go through the first hollow pipe (135, 233) to connect the pump outlet (122, 222);
the flower nozzle (160, 260) has a plurality of spouts (164) along its periphery and has a third hollow pipe (161, 261) extending downwards from the center of the flower nozzle (160, 260) to be inserted into the second hollow pipe (152, 251) of the water storage tray (150, 250), and the flower nozzle (160, 260) further has a top cover (165) covering on the top of the third hollow pipe (161, 261); water in the bucket (110, 210) is pumped upwards from the pump outlet (122, 222) into the second hollow pipe (152, 251) of the water storage tray (150, 250) and then into the third hollow pipe (161, 261) of the flower nozzle (160, 260) and then flows out from the spouts (164).

2. The pet water fountain (100, 200) of claim 1, wherein at least one overflow hole (137, 236) is arranged on the upper tray (130, 230), directly communicated with the inner space of the bucket (110, 210).

3. The pet water fountain (100, 200) of claim 1, wherein a plurality of drop holes (255) are formed on the water storage tray (150, 250) which allow water in the water storage tray (150, 250) dropping down and flowing back into the bucket (110, 210) via the plurality of through holes (136, 234) in the recess (133, 232) after being filtered by the filter (140, 240).

4. The pet water fountain (100, 200) of claim 3, wherein the water storage tray (150, 250) has an inner flange (153, 252) which surrounds a top end of the second hollow pipe (152, 251) and an outer flange (154, 253) which is supported on the upper tray (130, 230), and a space for storing water (151, 254) is provided between the inner flange (153, 252) and the outer flange (154, 253) on the water storage tray (150, 250).

5. The pet water fountain (100, 200) of claim 1, wherein an upper edge (162) is formed on the top of the third hollow pipe (161, 261) of the flower nozzle (160, 260), and a plurality of petal-shaped bumps (163) are formed and evenly spaced surrounding the upper edge (162), an interval between each two adjacent petal-shaped bumps (163) forms the spout (164).

6. The pet water fountain (100, 200) of claim 5, wherein the top cover (165) comprises a top baffle (1652) covering over inner sides of the plurality of petal-shaped bumps (163) and a fourth hollow pipe (1651) extending downwards from the bottom center of the top baffle (1652), and a lower end of the fourth hollow pipe (1651) is connected with the third hollow pipe (161, 261), an upper end of the fourth hollow pipe (1651) has openings (1654) corresponding to each of the spouts (164);
wherein preferably the lower end of the fourth hollow pipe (1651) is thread connected with the third hollow pipe (161, 261).

7. The pet water fountain (200) of any of the preceding claims, wherein a first circle of rib (214) is formed on the bottom of the bucket (210), and the pump (220) is attached in an area surrounded by the first circle of rib (214) by suction cups (223) provided at the bottom of the pump (220).

8. The pet water fountain (200) of claim 7, wherein a filtering sponge (270) which is positioned by a second circle of rib (215) formed on the bottom of the bucket (210) is arranged in front of a pump inlet (221) of the pump (220).

9. The pet water fountain (100, 200) of any of the preceding claims, wherein a wire passage (111, 211) is formed along the inner side of the bucket (110, 210), and an electrical wire of the pump (120, 220) is led into the wire passage (111, 211) from top to bottom through the bucket (110, 210) and then is led out from the bottom of the bucket (110, 210).

10. The pet water fountain (200) of claim 9, wherein a first notch (213) is formed at the bottom of a sidewall of the bucket (210) towards the wire passage (211), used for facilitating the electrical wire being led out; and/or
a second notch (2111) is formed on the top of the wire passage (211), through which the electrical wire of the pump (220) is led into the wire passage (211); and/or
the top of the wire passage (211) is stuffed by an elastic plug (280), and the elastic plug (280) has a third notch (281) for the electrical wire of the pump (220) being led into the wire passage (211).

11. The pet water fountain (100, 200) of any of the preceding claims, wherein a transparent or semitransparent window (113, 212) is arranged on a sidewall of the bucket (110, 210).

12. The pet water fountain (100, 200) of any of the preceding claims, wherein the water storage tray (150, 250) is fastened on the upper tray (130, 230) by snap-fit or close-fit structures, and the upper tray (130, 230) is fastened on the bucket (110, 210) by snap-fit or close-fit structures, and wherein preferably at least a notch (216) is formed on the top end of the bucket (210) for facilitating separation of the upper tray (130) and the bucket (210).

13. The pet water fountain (100, 200) of any of the preceding claims, wherein the filter (140, 240) comprises a lower layer of non-woven cloth (141) having a plurality of containing cavities (1412) and a upper layer of non-woven cloth (142) that is attached to the lower layer (141) so as to seal the plurality of containing cavities (1412), and filtering material is filled in each of the plurality of containing cavities (1412).

## Patentansprüche

1. Haustierwasserbrunnen (100, 200) umfassend:
einen Eimer (110, 210), der zur Wasserbehaltung konfiguriert ist;
eine Pumpe (120, 220), die im Eimer (110, 210) positioniert ist;
eine Oberschale (130, 230);
eine Wasserspeicherschale (150, 250) an der Oberseite der Oberschale (130, 230);
einen Filter (140, 240), der zwischen der Oberschale (130, 230) und der Wasserspeicherschale (150, 250) angeordnet ist; und
eine Blumendüse (160, 260), die auf der Oberseite der Wasserspeicherschale (150, 250) gestützt ist;
wobei ein Pumpauslass (122, 222) der Pumpe (120, 220) mit einem Wassereinlass (152, 251) der Wasserspeicherschale (150, 250) in Verbindung steht; Wasser im Eimer (110, 210) aus dem Pumpauslass (122, 222) nach oben in den Wassereinlass (152, 251) der Wasserspeicherschale (150, 250) und denn in die Blumendüse (160, 260) eingepumpt wird, und denn aus der Blumendüse auf die Wasserspeicherschale (150, 250) fällt, und denn aus der Wasserspeicherschale (150, 250) zur Oberschale (130, 230) nach Filtrierung durch den Filter (140, 240) und in den Eimer (110, 210) zurück strömt;
wobei die Oberschale (130, 230) einen Schleckrand (132, 231) aufweist, der an der Oberseite des Eimers (110, 210) gestützt ist, und eine Vertiefung (133, 232) im Zentrum der Oberschale (130, 230) gebildet ist, mit einem ersten im Zentrum der Vertiefung (133, 232) liegenden Hohlrohr (135, 233), und mit einer Vielzahl von auf der Vertiefung (133, 232) um das erste Hohlrohr (135, 233) gebildeten Durchgangslöchern (136, 234); der Filter (140, 240) in der Vertiefung (133, 232) enthalten ist, die das erste Hohlrohr (135, 233) umgibt;
wobei die Wasserspeicherschale (150, 250) ein zweites Hohlrohr (152, 251) aufweist, die sich nach unten durch das erste Hohlrohr (135, 233) zur Verbindung mit dem Pumpauslass (122, 222) erstreckt;
wobei die Blumendüse (160, 260) eine Vielzahl von Ausgussöffnungen (164) ihren Umfang entlang aufweist, und ein drittes Hohlrohr (161, 261) aufweist, das sich nach unten vom Zentrum der Blumendüse (160, 260) zur Einfügung ins zweite Hohlrohr (152, 251) der Wasserspeicherschale (150, 250) erstreckt, und die Blumendüse (160, 260) weiter einen Oberdeckel (165) aufweist, der die Oberseite des dritten Hohlrohres (161, 261) abdeckt; Wasser im Eimer (110, 210) aufwärts aus dem Pumpauslass (122, 222) ins zweite Hohlrohr (152, 251) der Wasserspeicherschale (150, 250) und dann ins dritte Hohlrohr der Blumendüse (160, 260) eingepumpt wird und dann aus den Ausgussöffnungen (164) strömt.

2. Haustierwasserbrunnen (100, 200) nach Anspruch 1, wobei zu mindestens ein Überlaufloch (137, 236) auf der Oberschale (130, 230) angeordnet ist, das in unmittelbarer Verbindung mit dem Innenraum des Eimers (110, 210) steht.

3. Haustierwasserbrunnen (100, 200) nach Anspruch 1, wobei eine Vielzahl von Tropfenlöchern (255) auf der Wasserspeicherschale (150, 250) gebildet sind, die das Abtropfen und das Zurückströmen von Wasser in der Wasserspeicherschale (150, 250) in den Eimer (110, 210) über eine Vielzahl von Durchgangslöchern (136, 234) in der Vertiefung (133, 232) nach Filtrierung durch den Filter (140, 240) ermöglichen.

4. Haustierwasserbrunnen (100, 200) nach Anspruch 3, wobei die Wasserspeicherschale (150, 250) einen Innenflansch (153, 252), der ein oberes Ende des zweiten Hohlrohres (152, 251) umgibt, und einen Außenflansch (154, 253,) der auf der Oberschale (130, 230) gestützt ist, aufweist, und ein Raum zur Wasserspeicherung (151, 254) zwischen dem Innenflansch (153, 252) und Außenflansch (154, 253) auf der Wasserspeicherschale (150, 250) vorgesehen ist.

5. Haustierwasserbrunnen (100, 200) nach Anspruch 1, wobei ein Oberrand (162) an der Oberseite des dritten Hohlrohres (161, 261) der Blumendüse (160, 260) gebildet ist, und eine Vielzahl von blumenblattförmigen Stößen gebildet sind und gleichmäßig verteilt den Oberrand (162) umgeben, ein Intervall zwischen jedem der zwei anliegenden blumenblattförmigen Stöße die Ausgussöffnung (164) bildet.

6. Haustierwasserbrunnen (100, 200) nach Anspruch 5, wobei der Oberdeckel (165) eine Oberprallfläche (1652), die Innenseiten der Vielzahl von blumenblattförmigen Stößen (163) überdeckt, und ein viertes Hohlrohr (1651), das sich nach unten vom Bodenzentrum der Oberprallfläche (1652) erstreckt, umfasst, und ein unteres Ende des vierten Hohlrohres (1651) mit dem dritten Hohlrohr (161, 261) verbunden ist, ein oberes Ende des vierten Hohlrohres (1651) jeder der Ausgussöffnungen (164) entsprechende Öffnungen (1654) aufweist; wobei vorzugsweise das untere Ende des vierten Hohlrohres (1651) ein mit dem dritten Hohlrohr (161, 261) verbundenes Gewinde ist.

7. Haustierwasserbrunnen (200) nach einem der vorhergehenden Ansprüche, wobei ein erster Rippekreis (214) auf dem Boden des Eimers (210) gebildet ist, und die Pumpe (220) in einem vom ersten Rippekreis (214) umgebenen Bereich mittels an dem Boden der Pumpe (220) vorgesehener Saugnäpfe (223) befestigt ist.

8. Haustierwasserbrunnen (200) nach Anspruch 7, wobei ein Filterschwamm (270), der mittels eines zweiten Rippekreises (215) auf dem Boden des Eimers (210) positioniert ist, vor einem Pumpeinlass (221) der Pumpe (220) angeordnet ist.

9. Haustierwasserbrunnen (100, 200) nach einem der vorhergehenden Ansprüche, wobei ein Drahtdurchgang (111, 211) die Innenseite des Eimers (110, 210) entlang gebildet ist, und ein elektrischer Draht der Pumpe (120, 220) in dem Drahtdurchgang (111, 211) von oben nach unten durch den Eimer (110, 210) geführt ist, und dann vom Boden des Eimers (110, 210) herausgeführt ist.

10. Haustierwasserbrunnen (200) nach Anspruch 9, wobei eine erste Kerbe (213) am Boden einer Seitenwand des Eimers (210) zum Drahtdurchgang (211) gebildet ist, zur Erleichterung der Herausführung des elektrischen Drahtes benutzt wird; eine zweite Kerbe (2111) an der Oberseite des Drahtdurchgangs (211) gebildet ist, wodurch der elektrische Draht der Pumpe im Drahtdurchgang (211) geführt ist, und/oder die Oberseite des Drahtdurchgangs (211) mittels eines elastischen Stopfens gefüllt ist, und der elastische Stopfen (280) eine dritte Kerbe (281) zur Einführung des elektrischen Drahtes der Pumpe (220) in den Drahtdurchgang (211) aufweist.

11. Haustierwasserbrunnen (100, 200) nach einem der vorhergehenden Ansprüche, wobei ein durchsichtiges oder halbdurchsichtiges Fenster (113, 212) auf einer Seitenwand des Eimers (110, 210) angeordnet ist.

12. Haustierwasserbrunnen (100, 200) nach einem der vorhergehenden Ansprüche, wobei die Wasserspeicherschale (150, 250) an der Oberschale (130, 230) durch Einrastungs- oder Formschlussstrukturen befestigt ist, und die Oberschale (130, 230) auf dem Eimer (110, 210) durch Einrastungs- oder Formschlussstrukturen befestigt ist, und wobei vorzugsweise zu mindesten eine Kerbe (216) an der Oberseite des Eimers (210) zur Erleichterung des Trennens der Oberschale (130, 230) und des Eimers (210) gebildet ist.

13. Haustierwasserbrunnen (100, 200) nach einem der vorhergehenden Ansprüche, wobei der Filter (140, 240) eine Unterschicht aus Vliesstoff (141), die eine Vielzahl von beinhaltenden Hohlräumen aufweist, und eine Oberschicht aus Vliesstoff (142) umfasst, die an der Unterschicht (141) befestigt ist, so dass die Vielzahl von beinhaltenden Hohlräumen (1412) abgedichtet sind, und Filtermaterial in jedem der Vielzahl von beinhaltenden Hohlräumen (1412) gefüllt ist.

## Revendications

1. Fontaine d'eau pour animaux de compagnie (100,200) comprenant:
un godet (110,210) configuré pour contenir de l'eau;
une pompe (120, 220) positionnée dans le godet (110,210);
un bac supérieur (130, 230);
un bac de stockage d'eau (150, 250) sur la partie supérieure du bac supérieur (130, 230);
un filtre (140, 240) étant disposé entre le bac supérieur (130, 230) et le bac de stockage d'eau (150, 250); et
un embout en forme de fleur (160, 260) s'appuyant sur la partie supérieure du bac de stockage d'eau (150, 250);
fontaine dans laquelle une sortie de pompe (122, 222) de la pompe (120, 220) communique avec une entrée d'eau (152, 251) du bac de stockage d'eau (150, 250); l'eau est pompée vers le haut à partir de la sortie de pompe (122, 222) dans l'entrée d'eau (152, 251) du bac de stockage d'eau (150, 250), et puis dans l'embout en forme de fleur (160, 260), et tombe alors dans le bac de stockage d'eau (150, 250) depuis l'embout en forme de fleur (160, 260), et s'écoule alors du bac de stockage d'eau (150, 250) vers le bac supérieur (130, 230) après filtration par le filtre (140, 240), et de retour dans le godet (110, 210);
où le bac supérieur (130, 230) présente un bord de lapement (132, 231) s'appuyant sur une partie supérieure du godet (110, 210), et un évidement (133, 232) est formé dans le centre du bac supérieur (130, 230), avec un premier tube creux (135, 233) étant situé au centre de l'évidement (133, 232) , et une pluralité de trous de passage (136, 234) étant formée sur l'évidement (133, 232) autour du premier tube creux (135, 233); le filtre (140, 240) est contenu dans l'évidement (133, 232) entourant le premier tube creux (135, 233);
où le bac de stockage d'eau (150, 250) présente un deuxième tube creux (152, 251) s'étendant vers le bas pour pénétrer dans le premier tube creux (135, 233) afin de se raccorder à la sortie de pompe (122, 222);
où l'embout en forme de fleur (160, 260) présente une pluralité de becs (164) le long de sa périphérie et présente un troisième tube creux (161, 261) s'étendant vers le bas à partir du centre de l'embout en forme de fleur (160, 260) pour s'insérer dans le deuxième tube creux (152, 251) du bac de stockage d'eau (150, 250), et l'embout en forme de fleur (160, 260) présente en outre un couvercle supérieur (165) couvrant la partie supérieure du troisième tube creux (161, 261) ; de l'eau dans le godet (110,210) est pompée vers le haut à partir de la sortie de pompe (122, 222) dans le deuxième tube creux (152, 251) du bac de stockage d'eau (150, 250) et ensuite dans le troisième tube creux (161, 261) de l'embout en forme de fleur (160, 260) et s'écoule alors en dehors des becs (164).

2. Fontaine d'eau pour animaux de compagnie (100,200) selon la revendication 1, dans laquelle au moins un orifice de trop plein (137, 236) est disposé sur le bac supérieur (130, 230) en communication directe avec l'espace intérieur du godet (110,210).

3. Fontaine d'eau pour animaux de compagnie (100,200) selon la revendication 1, dans laquelle une pluralité d'orifices d'égouttage (255) est formée sur le bac de stockage d'eau (150, 250) orifices qui permettent à de l'eau dans le bac de stockage d'eau (150, 250) de s'égoutter vers le bas et de refluer dans le godet (110, 210) par l'intermédiaire d'une pluralité de trous de passage (136, 234) dans l'évidement (133, 234) après filtration par le filtre (140, 240).

4. Fontaine d'eau pour animaux de compagnie (100,200) selon la revendication 3, dans laquelle le bac de stockage d'eau (150, 250) présente un flasque intérieur (153, 252) qui entoure une extrémité supérieure du deuxième tuyau creux (152, 251), et un flasque extérieur (154, 253), qui s'appuie sur le bac supérieur (130, 230), et un espace pour stocker de l'eau (151, 254) est prévu entre le flasque intérieur (153, 252) et le flasque extérieur (154, 253) sur le bac de stockage d'eau (150, 250).

5. Fontaine d'eau pour animaux de compagnie (100,200) selon la revendication 1, dans laquelle un bord supérieur (162) est formé sur la partie supérieure du troisième tube creux (161, 261) de l'embout en forme de fleur (160, 260), et une pluralité de bosses en forme de pétale (163) sont formées et espacées uniformément autour du bord supérieur (162), un intervalle entre deux bosses adjacentes en forme de pétale (163) forme un bec (164).

6. Fontaine d'eau pour animaux de compagnie (100,200) selon la revendication 5, dans laquelle le couvercle supérieur (165) forme une chicane supérieure (1652) recouvrant des faces intérieures d'une pluralité de bosses en forme de pétale (163) et un quatrième tube creux (1651) s'étendant vers le bas à partir du centre de fond de la chicane supérieure (1652), et une extrémité supérieure du quatrième tube creux (1651) est raccordée au troisième tube creux (161, 261), une extrémité supérieure du quatrième tube creux (1651) présente des ouvertures (1654) correspondant à chacun des becs (164); où l'extrémité inférieure du quatrième tube creux (1651) est de préférence un filet raccordé au troisième tube creux (161, 261).

7. Fontaine d'eau pour animaux de compagnie (200) selon l'une quelconque des revendications précédentes, dans laquelle un premier cercle de nervure (214) est formé sur le fond du godet (210), et la pompe (220) est fixée, dans une zone entourée par le premier cercle de nervure (214), par des ventouses (223) prévues sur le fond de la pompe (220).

8. Fontaine d'eau pour animaux de compagnie (200) selon la revendication 7, dans laquelle une éponge de filtration (270) qui est positionnée par un deuxième cercle de nervure (215) formé à la base du godet (210) est disposée devant une entrée de pompe (221) de la pompe (220).

9. Fontaine d'eau pour animaux de compagnie (100, 200) selon l'une quelconque des revendications précédentes, dans laquelle un passage pour fil (111, 211) est formé le long du côté intérieur du godet (110, 210), et un fil électrique de la pompe (120, 220) est amené dans le passage pour fil (111, 211) de haut en bas à travers le godet (110, 210) et est amené à l'extérieur à partir de la base du godet (110, 210).

10. Fontaine d'eau pour animaux de compagnie (200) selon la revendication 9, dans laquelle une première encoche (213) est formée à la base d'une paroi latérale du godet (210) en direction du passage pour fil (211), utilisée pour faciliter le retrait du fil électrique; et/ou une deuxième encoche (2111) est formée à la partie supérieure du passage pour fil (211), à travers laquelle le fil électrique de la pompe (220) est mené dans le passage pour fil (211); et/ou la partie supérieure du passage pour fil (211) est rembourrée par un bouchon élastique (280) , et le bouchon élastique (280) présente une troisième encoche (281) destinée à mener le fil électrique de la pompe (220) dans le passage pour fil (211).

11. Fontaine d'eau pour animaux de compagnie (100, 200) selon l'une quelconque des revendications précédentes, dans laquelle une fenêtre transparente ou semi-transparente (113, 212) est disposée sur une paroi latérale du godet (110, 210).

12. Fontaine d'eau pour animaux de compagnie (100, 200) selon l'une quelconque des revendications précédentes, dans laquelle le bac de stockage d'eau (150, 250) est fixé au bac supérieur (130, 230) par des structures d'encliquetage ou d'ajustement serré, et le bac supérieur (130, 230) est fixé au godet par des structures d'encliquetage ou d'ajustement serré, et dans laquelle de préférence au moins une encoche (216) est formée à la partie supérieure du godet (210) afin de faciliter la séparation du bac supérieur (130) par rapport au godet (210).

13. Fontaine d'eau pour animaux de compagnie (100, 200) selon l'une quelconque des revendications précédentes, dans laquelle le filtre (140, 240) comprend une couche inférieure d'étoffe non tissée (141) qui présente une pluralité de cavités contenantes (1412) et une couche supérieure d'étoffe non tissée (142) qui est fixée à la couche inférieure (141) de façon à étancher la pluralité de cavités contenantes (1412), et un matériau filtrant remplit chacune des cavités de la pluralité des cavités contenantes (1412).
